# EUROPÄISCHE PATENTSCHRIFT

(11) **EP 2 935 357 B1**
(45) Veröffentlichungstag und Bekanntmachung des Hinweises auf die Patenterteilung: **11.05.2016**
(21) Anmeldenummer: 13807993.4
(22) Anmeldetag: 16.12.2013
(51) Int. Cl.: C08F 16/06, C08L 29/04, C04B 40/00, C04B 24/26

(54) **VERWENDUNG VON POLYVINYLALKOHOL STABILISIERTEN POLYMERISATEN IN MINERALISCHEN BAUSTOFFMASSEN**
USE OF POLYVINYL-ALCOHOL-STABILISED POLYMERISATES IN MINERAL CONSTRUCTION MATERIALS
UTILISATION DE POLYMÉRISATS STABILISÉS PAR L'ALCOOL POLYVINYLIQUE DANS DES MATÉRIAUX DE CONSTRUCTION MINÉRAUX

(30) Priorität: 18.12.2012 DE 102012223614
(43) Veröffentlichungstag der Anmeldung: 28.10.2015
(73) Patentinhaber: Wacker Chemie AG, 81737 München (DE)
(72) Erfinder: HASHEMZADEH, Abdulmajid, 84489 Burghausen (DE); SEIDEL, Jessica, 84539 Zangberg (DE)
(74) Vertreter: Ege, Markus
(86) Internationale Anmeldenummer: PCT/EP2013/076704
(87) Internationale Veröffentlichungsnummer: WO 2014/095721

(56) Entgegenhaltungen:
- EP-A1- 0 632 096
- EP-A1- 1 724 288
- US-A1- 2006 189 772

## Beschreibung

Die vorliegende Erfindung betrifft die Verwendung von Polyvinylalkohol stabilisierten Polymerisaten in mineralischen Baustoffmassen, insbesondere in Fliesenklebern, Dichtschlämmen oder Spritzbeton.

Polyvinylalkohol stabilisierte Polymerisate finden vielfachen Einsatz in mineralischen Baustoffmassen, wie Beschichtungsmitteln oder Klebemitteln, zur Verbesserung von deren anwendungstechnischen Eigenschaften. Die Polymerisate basieren im Allgemeinen auf ethylenisch ungesättigten Monomeren, beispielsweise auf Vinylestern und Ethylen. Mit Wasser angemachte mineralische Baustoffmassen müssen generell über eine gewisse Zeit stabil bleiben und dürfen ihre Verarbeitungskonsistenz nicht wesentlich verändern (Viskositäts- bzw. Zementstabilität). Andernfalls kann der Anwender aus den Baustoffmassen keine Bauwerke mit den geforderten anwendungstechnischen Eigenschaften, wie Haftung, Wasserdichtigkeit oder mechanischen Eigenschaften, herstellen, oder der Anwender müsste innerhalb kurzer Zeitspannen immer wieder neue Baustoffmassen herstellen, was in der Praxis einen inakzeptablen Aufwand darstellt. Der Einsatz von gängigen Polyvinylalkoholen, die im Wesentlichen auf Vinylalkohol-Einheiten sowie Vinylester- und gegebenenfalls weiteren Comonomer-Einheiten, wie Ethylen-Einheiten, basieren, kann sich jedoch negativ auf die Verarbeitbarkeit von Polymer vergüteten mineralischen Baustoffmassen auswirken und beispielsweise zu einer hohen Kellenklebrigkeit oder hohen Viskosität führen. Derartige Probleme treten verstärkt bei mineralischen Baustoffmassen mit höheren Polymergehalten auf. Zur Verbesserung der Verarbeitbarkeit empfiehlt die EP1984428 die Verwendung von Schutzkolloiden auf Basis von kationischen Monomeren und gegebenenfalls nichtionischen Comonomeren. Als Gegenion enthalten die kationischen Monomere in der Praxis häufig Chlorid. Solche kationischen Schutzkolloidstabilisierten Systeme können jedoch bei Anwendung in mineralischen Baustoffmassen geruchsintensive Substanzen freisetzen, was verpönt ist, und auch zu einem signifikanten Eintrag an korrosiven Substanzen, wie Chloriden, führen. Die EP0770640 lehrt den Zusatz von Polymerzusammensetzungen basierend auf kationischen Polyelektrolyten sowie anionischen Polyelektrolyten. Solche Polymere basieren auf teuren Monomeren und bringen auf Grund ihrer großen anzahl an ionischen Gruppen große Mengen an gegebenenfalls korrosiv wirkende Gegenionen, wie Chloriden ein. Aus der EP0632096 sind nichtionische Polyvinylalkohole bekannt, die Einheiten von Alkylamin enthalten, und die dementsprechend bei Einsatz als Schutzkolloid für Polymerisate in mineralischen Baustoffmassen zu keinem Eintrag an korrosiven Substanzen, wie Chlorid, führen. Jedoch besteht bei Einsatz in mineralischen Baustoffmassen noch Verbesserungspotential hinsichtlich der Verarbeitbarkeit, wie der sogenannten offenen Zeit.

Vor diesem Hintergrund bestand die Aufgabe, Polyvinylalkohol stabilisierte Polymerisate bereitzustellen, die bei Einsatz in mineralischen Baustoffmassen zu einer weiteren Verbesserung der Verarbeitungseigenschaften, wie der Viskosität- bzw. Zementstabilität oder insbesondere zu einer Verlängerung der offenen Zeit, führen und nach Möglichkeit weniger geruchsintensive Substanzen freisetzen. Zudem sollten die Polyvinylalkohole auch kostengünstig und nach etablierten, nicht aufwändigen Verfahren zugänglich sein.

Überraschenderweise wurde diese Aufgabe gelöst, indem die Polymerisate mit Polyvinylalkoholen stabilisiert wurden, die Monomer-Einheiten mit tertiären Amin- oder quartären Ammonium-Gruppen enthielten.

Amin- oder Ammonium-Gruppen enthaltende Schutzkolloide sind an sich bekannt und haben in verschiedenen Anwendungsgebieten Einsatz gefunden. So beschreibt die WO-A 00/05275 ein Verfahren, bei dem kationische Monomere in wässrigem Medium polymerisiert werden und in Gegenwart des dabei in-situ gebildeten Polymerisats weitere Monomere polymerisiert werden. Die damit erhaltene Polymerdispersion wird dann in Gegenwart von Polyvinylalkohol sprühgetrocknet. Ein dazu analoges Verfahren wird in der WO-A 00/05283 beschrieben, wobei hier das Verfahren so gesteuert wird, dass Copolymerisatteilchen mit heterogener Morphologie gebildet werden. Derartige Verfahren sind jedoch aufwändig. Die JP S58-185640A und die JP S59-30827 beschreiben Polymerisate, die mit kationischen Polyvinylalkoholen stabilisiert sind, und erwägen deren Anwendungsmöglichkeiten in Beschichtungsmitteln, Klebemitteln, Farben oder auch generell in Baumaterialien, äußern sich aber nicht zu Verarbeitungseigenschaften von mineralischen Baustoffmassen. Die JP S57-121671 empfiehlt entsprechende Polyvinylalkoholstabilisierte Polymerisate als sizing agent für Fasern.

Gegenstand der Erfindung ist die Verwendung von Polyvinylalkohol stabilisierten Polymerisaten in mineralischen Baustoffmassen, dadurch gekennzeichnet, dass ein oder mehrere Polyvinylalkohole der Polyvinylalkohol stabilisierten Polymerisate ein oder mehrere tertiäre Amin-Gruppen oder ein oder mehrere quartäre Ammonium-Gruppen enthalten (Stickstoff funktionalisierte Polyvinylalkohole).

Die Begriffe tertiäre Amin-Gruppe bzw. quartäre Ammonium-Gruppe sind dem Fachmann wohlbekannt. In tertiären Amin-Gruppen ist das Stickstoffatom mit drei Kohlenstoffresten substituiert. Im Falle von quartären Ammonium-Gruppen ist das Stickstoffatom mit vier Kohlenstoffresten substituiert. Die quartären Ammonium-Gruppen können beispielsweise Sulfate, Hydroxide, Carboxylate oder besonders bevorzugt Halogenide, insbesondere Chlorid, als Gegenionen haben.

In den Stickstoff funktionalisierten Polyvinylalkoholen ist die tertiäre Amin-Gruppe im Allgemeinen über das Stickstoffatom der tertiären Amin-Gruppe an ein Kohlenstoffatom des Polyvinylalkohols gebunden und trägt zudem zwei Reste, die über ein Kohlenstoffatom an das Stickstoffatom der tertiären Amin-Gruppe gebunden sind. Eine quartäre Ammonium-Gruppe ist in den Stickstoff funktionalisierten Polyvinylalkoholen im Allgemeinen über das Stickstoffatom der quartären Ammonium-Gruppe an ein Kohlenstoffatom des Polyvinylalkohols gebunden und trägt zudem drei Reste, die über ein Kohlenstoffatom an das Stickstoffatom der quartären Ammonium-Gruppe gebunden sind. Die Reste können beispielsweise 1 bis 20 C-Atome und gegebenenfalls ein oder mehrere funktionelle Gruppen enthalten.

Die Stickstoff funktionalisierten Polyvinylalkohole sind vorzugsweise erhältlich mittels Copolymerisation von einem oder mehreren ethylenisch ungesättigten Monomeren, die ein oder mehrere tertiäre Amin-Gruppen oder ein oder mehrere quartäre Ammonium-Gruppen enthalten, mit einem oder mehreren Vinylestern von unverzweigten oder verzweigten Carbonsäuren mit 1 bis 15 C-Atomen, und Verseifung der damit erhaltenen Vinylester-Copolymerisate zu erfindungsgemäß mit Stickstoff funktionalisierten Polyvinylalkoholen.

Als ethylenisch ungesättigte Gruppe tragen die Monomere, die ein oder mehrere tertiäre Amin-Gruppen oder ein oder mehrere quartäre Ammonium-Gruppen enthalten, vorzugsweise ein oder mehrere Olefin-Gruppen, wie Allyl- oder Vinyl-, Acryl- oder Methacryl-Gruppen. Beispiele für ethylenisch ungesättigte Monomere, die ein oder mehrere tertiäre Amin-Gruppen oder ein oder mehrere quartäre Ammonium-Gruppen enthalten, sind Allyl-Alkyl-Ammoniumhalogenide, (Meth)Acryloxy-Alkyl-Ammoniumhalogenide, (Meth)Acrylamido-Alkyl-Ammoniumhalogenide, Amino-Alkyl-(Meth)Acrylat und Amino-Alkyl-(Meth)Acrylamid, wobei die Alkylreste 1 bis 20 C-Atome, insbesondere 1 bis 4 C-Atome, enthalten können, sowie Vinyl-Gruppen tragende, Stickstoffatom-haltige, gegebenenfalls substituierte Heteroaromaten. Beispiele für Heteroaromaten sind Imidazol oder Pyridin.

Ethylenisch ungesättigte Monomere, die tertiäre Amin-Gruppen enthalten, werden vorzugsweise ausgewählt aus der Gruppe umfassend 2-Dimethylaminoethylmethacrylat und 3-Dimethylaminopropylmethacrylamid (DMAEMA oder DMAPMA bei pH ≤ 5 protonierte Spezies) sowie N-(1,1-Dimethyl-3-dimethylaminopropyl)acrylamid, N-(1,1-Dimethyl-3-dimethylaminobutyl)acrylamid, N-(1-Methyl-1,3-diphenyl-3-diethyl-aminopropyl)methacrylamid, 1-Vinylimidazol, 1-Vinyl-2-methylimidazol, 1-Vinyl-2-ethylimidaazol, 1-Vinyl-2-phenylimidazol, 1-Vinyl-2,3-dimethylimidazol und 1-Vinyl-2,4,5-trimethylimidazol.

Bevorzugte ethylenisch ungesättigte Monomere, die quartäre Ammonium-Gruppen enthalten, werden ausgewählt aus der Gruppe umfassend Diallyldiethylammoniumchlorid (DADEAC), (3-Methacryloxy)propyltrimethylammoniumchlorid (MPTAC), (3-Methacryloxy)-ethyltrimethylammoniumchlorid (METAC), (3-Methacrylamido)propyltrimethyl-ammoniumchlorid (MAPTAC), Trimethyl-3-(1-acrylamido-1,1-dimethylpropyl)ammoniumchlorid, Trimethyl-3-(1acrylamido-1,1-dimethylbutyl)ammoniumchlorid, Dimethylacrylamidopropyl-4-trimethylammoniumbutenyl-2-ammoniumchlorid, (2-Acrylamidomethoxy)ethyltrimethylammoniumchlorid und insbesondere Diallyldimethylammoniumchlorid (DADMAC).

Besonders bevorzugt sind hierbei Diallyldimethylammoniumchlorid (DADMAC), Diallyldiethylammoniumchlorid (DADEAC), (3-Methacryloxy)propyltrimethylammoniumchlorid (MPTAC), (3-Methacryloxy)ethyltrimethylammoniumchlorid (METAC) und (3-Methacrylamido)propyltrimethyl-ammoniumchlorid (MAPTAC).

Vinylester sind Vinylester von unverzweigten oder verzweigten Carbonsäuren mit 1 bis 15 C-Atomen. Bevorzugte Vinylester sind Vinylacetat, Vinylpropionat, Isopropenylacetat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 15 C-Atomen, beispielsweise VeoVa9R oder VeoVa10R (Handelsnamen der Firma Resolutions). Besonders bevorzugt sind Isopropenylacetat und insbesondere Vinylacetat.

Zusätzlich können gegebenenfalls noch ein oder mehrere Comonomere aus der Gruppe umfassend Methacrylsäureester und Acrylsäureester von Alkoholen mit 1 bis 15 C-Atomen, Olefine, Diene, Vinylaromaten und Vinylhalogenide copolymerisiert werden.

Geeignete Comonomere aus der Gruppe der Ester der Acrylsäure oder Methacrylsäure sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat. Beispiele für Diene sind 1,3-Butadien und Isopren. Beispiele für polymerisierbare Olefine sind Ethen und Propen. Als Vinylaromaten können Styrol und Vinyltoluol einpolymerisiert werden. Aus der Gruppe der Vinylhalogenide werden üblicherweise Vinylchlorid, Vinylidenchlorid oder Vinylfluorid, vorzugsweise Vinylchlorid, eingesetzt. Der Anteil dieser Comonomere wird vorzugsweise so bemessen, dass der Anteil an Vinylestermonomer > 50 Mol-% im Vinylester-Polymerisat beträgt.

Gegebenenfalls können noch Hilfsmonomere in einem Anteil von vorzugsweise 0,01 bis 20 Gew.-%, bezogen auf das Gesamtgewicht der insgesamt eingesetzten Monomere, copolymerisiert werden. Beispiele hierfür sind ethylenisch ungesättigte Mono- und Dicarbonsäuren, vorzugsweise Crotonsäure, Acrylsäure, Methacrylsäure, Fumarsäure und Maleinsäure; ethylenisch ungesättigte Carbonsäureamide und -nitrile, vorzugsweise N-Vinylformamid, Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Ferner sind als Hilfsmonomere geeignet Vinylether, Vinylketone, weitere vinylaromatische Verbindungen, die auch Heteroatome besitzen können.

Geeignete Hilfsmonomere sind auch polymerisierbare Silane bzw. Merkaptosilane. Bevorzugt sind γ-Acryl- bzw. γ-Methacryloxypropyltri(alkoxy)silane, α-Methacryloxymethyltri(-alkoxy)silane, γ-Methacryloxypropyl-methyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können.

Vorzugsweise werden jedoch keine Hilfsmonomere, insbesondere keine anionischen Hilfsmonomere, wie ethylenisch ungesättigte Sulfonsäuren, ethylenisch ungesättigte Mono- und Dicarbonsäuren oder Monoester der Fumarsäure und Maleinsäure, copolymerisiert. Bei den bevorzugten Stickstoff funktionalisierten Polyvinylalkoholen handelt es sich also um keine anionischen Polyelektrolyte, d.h. um keine Polymere, die anionische Gruppen bzw. Monomer-Einheiten mit negativer Ladung enthalten.

Bevorzugt werden Vinylacetat und ein oder mehrere ethylenisch ungesättigte Monomere, die ein oder mehrere tertiäre Amin-Gruppen oder ein oder mehrere quartäre Ammonium-Gruppen enthalten, copolymerisiert. In einer alternativen bevorzugten Ausführungsform können zusätzlich Ethylen und/oder Isopropenylacetat copolymerisiert werden. Der Anteil von Ethylen und/oder Isopropenylacetat beträgt vorzugsweise 0 bis 15 Gew.-%, besonders bevorzugt 1 bis 15 Gew.-% und am meisten bevorzugt 2 bis 15 Gew.-%, je bezogen auf das Gesamtgewicht der insgesamt eingesetzten Monomere. Die verbleibenden Monomere sind vorzugsweise ausschließlich Vinylacetat und ethylenisch ungesättigte Monomere, die ein oder mehrere tertiäre Amin-Gruppen oder ein oder mehrere quartäre Ammonium-Gruppen enthalten.

Die Copolymerisation von ethylenisch ungesättigten Monomeren, die tertiäre Amin-Gruppen oder quartäre Ammonium-Gruppen enthalten, mit Vinylestern und gegebenenfalls weiteren Comonomeren und/oder gegebenenfalls Hilfsmonomeren erfolgt im Allgemeinen in einem Gemisch aus Wasser und ein oder mehreren Alkoholen, insbesondere ein oder mehreren einwertige, aliphatische Alkoholen, mit einem Wasseranteil von 2 bis 35 Gew.-%, vorzugsweise 4 bis 20 Gew.-%. Bevorzugte Alkohole sind Alkanole mit C₁- bis C₆-Alkylrest. Besonders bevorzugt werden Methanol, Ethanol oder iso-Propanol.

Die Copolymerisation wird im Allgemeinen unter Rückfluss bei einer Temperatur von 40°C bis 100°C durchgeführt und durch Zugabe gängiger Initiatoren radikalisch initiiert. Beispiele für gängige Initiatoren sind Azoinitiatoren, oder Percarbonate wie Cyclohexylperoxidicarbonat, oder Perester wie t-Butylperneodecanoat oder t-Butylperpivalat, sowie Peroxide wie t-Butylhydroperoxid. Die Einstellung des Molekulargewichts kann in bekannter Weise durch Zugabe von Regler, durch den Lösungsmittelgehalt, durch Variation der Initiatorkonzentration und durch Variation der Temperatur erfolgen. Nach Abschluss der Polymerisation kann das Lösungsmittel sowie gegebenenfalls überschüssiges Monomer und Regler abdestilliert werden.

Die Verseifung der Vinylester-Copolymerisate erfolgt in an sich bekannter Weise, zum Beispiel nach dem Band- oder Kneterverfahren, im Alkalischen oder Sauren, unter Zugabe von Säure oder Base. Vorzugsweise wird das Vinylester-Copolymerisat in Alkohol, beispielweise Methanol, unter Einstellen eines Feststoffgehalts von 10 bis 80 Gew.-% aufgenommen. Bevorzugt wird die Hydrolyse im Basischen durchgeführt, beispielsweise durch Zugabe von NaOH, KOH oder NaOCH₃. Die Base wird im Allgemeinen in einer Menge von 1 bis 5 Mol-% pro Mol Ester-Einheiten eingesetzt. Die Hydrolyse wird vorzugsweise bei Temperaturen von 25°C bis 80°C durchgeführt. Nach Abschluss der Hydrolyse wird das Lösungsmittel vorzugsweise abdestilliert und das verseifte Vinylester-Copolymerisat, d.h. der Stickstoff funktionalisierte Polyvinylalkohol, als Pulver erhalten. Der Stickstoff funktionalisierte Polyvinylalkohol kann aber auch durch eine sukzessive Zugabe von Wasser, während das Lösungsmittel abdestilliert wird, als wässrige Lösung gewonnen werden.

Die Stickstoff funktionalisierten Polyvinylalkohole haben einen Hydrolysegrad von vorzugsweise 0,2 bis 100 Mol%, besonders bevorzugt 50 bis 100 Mol%, noch mehr bevorzugt 85 bis 100 Mol-% und am meisten bevorzugt 90 bis 100 Mol%. Der Hydrolysegrad bezeichnet hierbei den Mol-Anteil der verseiften Vinylester-Einheiten bezogen auf die Gesamtmolmenge an verseiften und unverseiften Vinylester-Einheiten der Stickstoff funktionalisierten Polyvinylalkohole.

Die Viskosität der Stickstoff funktionalisierten Polyvinylalkohole beträgt vorzugsweise 1 bis 40 mPas, besonders bevorzugt 1 bis 20 mPas und am meisten bevorzugt 2 bis 15 mPas (Bestimmung mit der Methode nach Höppler gemäß DIN 53015 in einer 4 %-igen Lösung in Wasser und einer Temperatur von 20°C).

Die Stickstoff funktionalisierten Polyvinylalkohole enthalten vorzugsweise 0,1 bis 50 Mol%, besonders bevorzugt 1 bis 30 Mol% und am meisten bevorzugt 2 bis 20 Mol% an Monomer-Einheiten, die ein oder mehrere tertiäre Amin-Gruppen und/oder ein oder mehrere quartäre Ammonium-Gruppen enthalten, je bezogen auf die Gesamtzahl an Vinylalkohol-Einheiten und der Monomer-Einheiten, die ein oder mehrere tertiäre Amin-Gruppen und/oder ein oder mehrere quartäre Ammonium-Gruppen enthalten, sowie gegebenenfalls der Vinylacetat-Einheiten der Stickstoff funktionalisierten Polyvinylalkohole.

Bei den verbleibenden Monomer-Einheiten der Stickstoff funktionalisierten Polyvinylalkohole handelt es sich vorzugsweise um Vinylalkohol- und Vinylester-Einheiten, insbesondere um Vinylalkohol- und Vinylacetat-Einheiten sowie gegebenenfalls um Isopropenylacetat- und Isopropenylalkohol-Einheiten, und gegebenenfalls um Ethylen-Einheiten.

Die Polymerisate, die mit den erfindungsgemäßen Stickstofffunktionalisierten Polyvinylalkoholen stabilisiert sind, werden im Folgenden auch als Basispolymerisate bezeichnet. Die Basispolymere basieren im Allgemeinen auf einem oder mehreren Monomeren ausgewählt aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene oder Vinylhalogenide. Hierfür sind dieselben Monomere bevorzugt, besonders bevorzugt und am meisten bevorzugt die weiter oben entsprechend aufgeführt sind. Des Weiteren können auch die oben genannten Hilfsmonomere, gegebenenfalls in den oben genannten Mengen, eingesetzt werden.

Beispiele für als Basispolymerisat geeignete Homo- und Mischpolymerisate sind Vinylacetat-Homopolymerisate, Styrol-Acrylsäureester-Copolymerisate, Styrol-1,3-Butadien-Copolymerisate und insbesondere Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid.

Bevorzugt werden Vinylacetat-Homopolymerisate; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 15 C-Atomen im Carbonsäurerest wie Vinylpropionat, Vinyldodecanoat, Vinylester von alpha-verzweigten Carbonsäuren mit 9 bis 13 C-Atomen wie VeoVa9®, VeoVa10®, VeoVa11®; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit Vinylacetat, 1 bis 40 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-(Meth)acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-(Meth)acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Basispolymere sind vorzugsweise nicht kationisch, insbesondere nicht anionisch und besonders bevorzugt nichtionisch. Die Basispolymere enthalten also vorzugsweise keine Monomer-Einheiten mit kationischer oder anionischer Ladung. Die Basispolymere sind also im Allgemeinen keine Polyelektrolyte.

Die Monomerauswahl bzw. die Auswahl der Gewichtsanteile der Comonomere erfolgt dabei so, dass im allgemeinen eine Glasübergangstemperatur Tg von -40°C bis +30°C, vorzugsweise -40°C bis +25°C und besonders bevorzugt -20°C bis +10°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt bevorzugt nach dem Emulsionspolymerisationsverfahren, wobei die Polymerisationstemperatur im Allgemeinen, aber nicht notwendigerweise < 100°C beträgt. Die Polymerisation kann unabhängig vom Polymerisationsverfahren mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemische, oder nach dem Dosierverfahren ohne Vorlage durchgeführt werden. Die Comonomere können zur Herstellung der Dispersion alle vorgelegt werden (Batch-Prozess), oder es wird ein Teil der Monomere vorgelegt und der Rest dosiert (Semibatch-Prozess).

Die Initiierung der Polymerisation erfolgt mit den für die Emulsionspolymerisation gebräuchlichen wasserlöslichen Initiatoren oder Redox-Initiator-Kombinationen, Beispiele für wasserlösliche Initiatoren sind die Natrium-, Kalium- und Ammoniumsalze der Peroxodischwefelsäure, Wasserstoffperoxid, tert.-Butylperoxid, tert.-Butylhydroperoxid, Kaliumperoxodiphosphat, tert.-Butylperoxopivalat, Cumolhydroperoxid, Isopropylbenzolmonohydroperoxid, und Azobisisobutyronitril. Die genannten Initiatoren werden im Allgemeinen in einer Menge von 0,001 bis 2 Gew.-%, vorzugsweise 0,1 bis 0,5 Gew.-%, jeweils bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0,001 bis 1 Gew.-%, vorzugsweise 0,1 bis 0,5 Gew.-%, jeweils bezogen auf das Gesamtgewicht der Monomere.

Die Polymerisation kann in Gegenwart von einem oder mehreren erfindungsgemäßen Stickstoff funktionalisierten Polyvinylalkoholen und/oder einem oder mehreren sonstigen Schutzkolloiden erfolgen, wie beispielsweise Polyvinylalkoholen, Polyvinylacetalen, Polyvinylpyrrolidonen, Polysacchariden in wasserlöslicher Form, wie Stärken (amylose und Amylopectin), Cellulosen und deren Methyl-, Hydroxyethyl-, Hydroxypropyl-Derivate, Poly(meth)acrylamid. Die vorgenannten sonstigen Schutzkolloide sind vorzugsweise nichtionisch und sind besonders bevorzugt mit keiner Amin- oder Ammonium-Gruppe substituiert. Polyvinylalkohole sind als sonstige Schutzkolloide bevorzugt und weisen vorzugsweise die oben für die Stickstoff funktionalisierten Polyvinylalkohole angeführten Viskositäten auf. Die Polyvinylalkohole können vollverseift oder vorzugsweise teilverseift sein. Vollverseifte Polyvinylalkohole haben einen Hydrolysegrad von vorzugsweise > 96 Mol-% und besonders bevorzugt von 97 bis 99,9 Mol-%. Teilverseifte Polyvinylalkohole haben einen Hydrolysegrad > 50 Mol-% und ≤ 96 Mol-%, besonders bevorzugt 70 Mol-% bis 96 Mol-% und am meisten bevorzugt von 80 Mol-% bis 94 Mol-%.

Bei der Polymerisation zur Herstellung der Basispolymere werden im Allgemeinen 1 bis 20 Gew.-%, vorzugsweise 5 bis 15 Gew.-% und am meisten bevorzugt 5 bis 10 Gew.-% Stickstoff funktionalisierte Polyvinylalkohole und/oder sonstige Schutzkolloide eingesetzt, bezogen auf das Gesamtgewicht der Basispolymere.

Alternativ kann die Polymerisation auch in Gegenwart von Emulgatoren durchgeführt werden oder in Gegenwart der genannten Schutzkolloide in Kombination mit Emulgatoren. Hierbei sind nichtionische Emulgatoren bevorzugt. Beispiele für nichtionische Emulgatoren sind Tenside wie Alkylpolyglykolether oder Alkylarylpolyglykolether mit 8 bis 40 Alkylenoxid-Einheiten. Bevorzugt werden alkoxylierte C₈- bis C₁₆-Alkanole, welche mit C₂- bis C₄-Alkylenoxiden, insbesondere Ethylenoxid und Propylenoxid oder deren Gemische, alkoxyliert sind. Die Emulgatoren werden im allgemeinen in einer Menge von 0,05 bis 10 Gew.-%, bezogen auf das Gesamtgewicht der Monomere, bei der Polymerisation zugesetzt.

Die wässrigen Dispersionen der Basispolymere haben einen Feststoffgehalt von vorzugsweise 30 bis 75 Gew.-%, besonders bevorzugt 50 bis 60 Gew.-%.

Zur Herstellung der in Wasser redispergierbaren Polymerpulver können die wässrigen Dispersionen nach Zusatz von einem oder mehreren erfindungsgemäßen Stickstoff funktionalisierten Polyvinylalkoholen und/oder einem oder mehreren weiteren Schutzkolloiden, wie den oben genannten sonstigen Schutzkolloiden, als Trocknungshilfe, getrocknet werden.

Die erfindungsgemäßen Stickstoff funktionalisierten Polyvinylalkohole können vor, während oder nach der Trocknung Basispolymerdispersionen, vorzugsweise als Trocknungshilfe, zugesetzt werden. Als Trocknungshilfe werden neben den erfindungsgemäßen Stickstoff funktionalisierten Polyvinylalkoholen vorzugsweise keine weiteren Schutzkolloide zugesetzt. Besonders bevorzugt werden die erfindungsgemäßen Stickstoff funktionalisierten Polyvinylalkohole nicht vor oder während der Polymerisation zur Herstellung der Basispolymere eingesetzt.

Die Trocknung erfolgt beispielsweise mittels Wirbelschichttrocknung, Gefriertrocknung oder Sprühtrocknung. Vorzugsweise werden die Dispersionen der Basispolymere sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage und gewünschtem Trocknungsgrad, gewählt.

In der Regel werden erfindungsgemäße Stickstoff funktionalisierte Polyvinylalkohole, gegebenenfalls in Kombination mit weiteren Schutzkolloiden, in einer Menge von insgesamt 2 bis 30 Gew.-%, bevorzugt 2 bis 20 Gew.-%, besonders bevorzugt 3 bis 15 Gew.-% eingesetzt. Für den Fall, dass auf die Rheologie der mineralischen Baustoffmassen besonderer Wert gelegt wird, betragen die vorgenannten Einsatzmengen vorzugsweise 2 bis 30 Gew.-%, besonders bevorzugt 2 bis 20 Gew.-% und am meisten bevorzugt 5 bis 15 Gew.-%. Wenn das Augenmerk auf die Haftung der mineralischen Baustoffmassen auf Untergründen gerichtet wird, betragen die vorgenannten Einsatzmengen vorzugsweise 2 bis 10 und besonders bevorzugt 3 bis 7 Gew.-%. Die vorigen Angaben in Gew.-% beziehen sich jeweils auf die polymeren Bestandteile der Polymerpulver.

Bei der Trocknung hat sich vielfach ein Gehalt von bis zu 2 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaoline, Silicate mit Teilchengrößen vorzugsweise im Bereich von 10 nm bis 100 µm.

Die Viskosität der zu zerstäubenden und zu trocknenden Mischung wird über den Feststoffgehalt so eingestellt, dass ein Wert von < 1000 mPas (Brookfield-Viskosität bei 20 Umdrehungen und 23°C), bevorzugt < 500 mPas, vor allem bevorzugt <250 mPas erhalten wird. Der Feststoffgehalt der zu zerstäubenden Mischung sollte > 30 Gew.-%, bevorzugt > 40 Gew.-% betragen.

Zur Verbesserung der anwendungstechnischen Eigenschaften können vor oder während oder nach der Trocknung weitere Zusätze zugegeben werden. Weitere, in bevorzugten Ausführungsformen enthaltene Bestandteile von Dispersionspulverzusammensetzungen sind beispielsweise Schaumstabilisatoren, Hydrophobierungsmittel oder Weichmacher.

Die mineralischen Baustoffmassen enthalten im Allgemeinen ein oder mehrere mineralische Bindemittel, insbesondere ein oder mehrere hydraulisch abbindende Bindemittel, ein oder mehrere mit Stickstoff funktionalisiertem Polyvinylalkohol stabilisierte Polymerisate, vorzugsweise ein oder mehrere Füllstoffe und gegebenenfalls ein oder mehrere Additive.

Beispiele für hydraulisch abbindende Bindemittel sind Zement, wie Portland-, Aluminat-, Trass-, Hätten-, Magnesia-, Phosphatzement, Gips oder auch Wasserglas, Kalkhydrat, Metakaolin, Flugasche, Diatomeenerde oder amorphes Silica.

Als Füllstoffe können beispielsweise Kalksteinmehl, Ton, Talkum oder vorzugsweise die gängigen Quarzsand oder Carbonate, wie Calciumcarbonate, eingesetzt werden. Übliche Korngrößen der Füllstoffe sind 0,5 bis 5,0 mm, bevorzugt 1,0 bis 3,0 mm.

Typische Rezepturen der mineralischen Baustoffmassen enthalten im Allgemeinen 1 bis 50 Gew.-%, insbesondere 2 bis 45 Gew.-% mineralische Bindemittel, 0,5 bis 40 Gew.-%, vorzugsweise 1 bis 30 Gew.-%, besonders bevorzugt 1 bis 10 Gew.-% erfindungsgemäße stabilisierte Polymerisate, 45 bis 80 Gew.-%, vorzugsweise 50 bis 70 Gew.-% Füllstoffe und gegebenenfalls 0 bis 5 Gew.-%, insbesondere 0,1 bis 3 Gew.-% Additive. Im Falle von Bauklebern, insbesondere Fliesenklebern, werden vorzugsweise 1 bis 5 Gew.-% erfindungsgemäß stabilisierte Polymerisate eingesetzt. In Dichtschlämme werden vorzugsweise 15 bis 40 Gew.-% erfindungsgemäß stabilisierten Polymerisate eingesetzt. Die vorigen Angaben in Gew.-% beziehen sich auf das Trockengewicht der mineralischen Baustoffmassen und addieren sich insgesamt auf 100 Gew.-%.

Die mineralischen Baustoffmassen liegen vorzugsweise in Form von Trockenmischungen vor. Die mineralischen Baustoffmassen werden im Allgemeinen vor ihrer Applikation, insbesondere direkt vor ihrer Applikation, durch Zugabe von Wasser in wässrige Baustoffmassen überführt.

Zur Verbesserung der Verarbeitungseigenschaften können den mineralischen Baustoffmassen Additive zugegeben werden. Übliche Additive sind Verdickungsmittel, beispielsweise Polysaccharide wie Celluloseether und modifizierte Celluloseether, Stärkeether, Guar Gum, Xanthan Gum, Polycarbonsäuren wie Polyacrylsäure und deren Teilester, sowie Polyvinylalkohole, welche gegebenenfalls acetalisiert oder hydrophob modifiziert sein können, Casein und assoziativ wirkende Verdicker. Übliche Additive sind auch Abbindebeschleuniger, beispielsweise Alkali- oder Erdalkalisalze von anorganischen oder organischen Säuren. Darüber hinaus sind noch zu nennen: Hydrophobierungsmittel, Filmbildehilfsmittel, Dispergiermittel, Schaumstabilisatoren, Entschäumer, Verflüssiger und Fließmittel.

Die mineralischen Baustoffmassen eignen sich beispielsweise als Baukleber, insbesondere Fliesenkleber (beispielsweise Hochflexkleber) oder Vollwärmeschutzkleber, Putze, Spachtelmassen, wie Fußbodenspachtelmassen, Verlaufsmassen, Dichtschlämmen, Fugenmörtel oder zur Betonmodifizierung, beispielsweise für Spritzbeton. Bevorzugte Anwendungsgebiete sind Dichtschlämmen und Fliesenkleber, insbesondere auch Fliesenkleber für Holzuntergründe.

Überraschenderweise werden bei dem erfindungsgemäßen Vorgehen mineralische Baustoffmassen erhalten, die vorteilhafte Verarbeitungseigenschaften, insbesondere die gewünschte offene Zeit, aufweisen. Zudem sind erfindungsgemäß auch geruchsarme mineralische Baustoffmassen zugänglich. Die erfindungsgemäß stabilisierten Polymerisate sind auch nach den etablierten Verfahren kostengünstig zugänglich.

Die nachfolgenden Beispiele dienen der weiteren Erläuterung der Erfindung:

### Kationische Schutzkolloide (SK):

### SK-1:

Die Herstellung des kationischen Polyvinylalkohols erfolgte durch Polymerisation von 95 Gew.-Teilen Vinylacetat und 5 Gew.-Teilen (2,7 Mol%) Diallyldimethylammoniumchlorid(DADMAC) analog zu Beispiel 1 der US2006/0264572 und anschließender Verseifung wie in der allgemeinen Arbeitsvorschrift der US2006/0264572 beschrieben.
Der kationische Polyvinylalkohol hatte einen Verseifungsgrad von 99 Mol-% sowie eine Höpplerviskosität von 5,1 mPas. Der Verseifungsgrad bezieht sich hierbei, wie auch bei den folgenden kationischen Schutzkolloiden, auf das Verhältnis aus verseiften Vinylacetat-Einheiten und der Gesamtzahl aus unverseiften und verseiften Vinylacetat-Einheiten.

### SK-2:

Analog zu SK-1 mit dem Unterschied, dass bei der Polymerisation 90 Gew.-Teile Vinylacetat und 10 Gew.-Teile (5,5 Mol%) DADMAC eingesetzt wurden und SK-2 einen Verseifungsgrad von 97 Mol% sowie eine Höpplerviskosität von 4,2 mPas aufwies.

### SK-3:

Analog zu SK-1 mit dem Unterschied, dass bei der Polymerisation 82 Gew.-Teile Vinylacetat und 18 Gew.-Teile (10,5 Mol%) DADMAC eingesetzt wurden SK-3 einen Verseifungsgrad von 80 Mol-% sowie eine Höpplerviskosität von 3,3 mPas aufwies.

### SK-4:

Analog zu SK-1 mit dem Unterschied, dass bei der Polymerisation 75 Gew.-Teile Vinylacetat und 25 Gew.-Teile (15 Mol%) DADMAC eingesetzt wurden und SK-4 einen Verseifungsgrad von 80 Mol-% sowie eine Höpplerviskosität von 3 mPas aufwies.

### VBSK-5:

Nichtionischer Polyvinylalkohol Mowiol M04/88 (Handelsname der Firma Kuraray) mit einem Verseifungsgrad von 88% und einer Höpplerviskosität von 4 mPas.

### VBSK-6:

Catiofast CS (Handelsname der Firma BASF): Polymer von DADMAC.

### VBSK-7:

Es wurde ein aminfunktioneller Polyvinylalkohol mit 5 Mol-% Allylamin nach EP 0632 096 A1 und einem Verseifungsgrad von 98 Mol-% hergestellt. Die Höpplerviskosität betrug 4,3 mPa.s.

### Polymerdispersion:

Wässrige Vinylacetat-Ethylen-Polymerdispersion mit einer Glasübergangstemperatur Tg von -7°C und einem Feststoffgehalt von 50 Gew.-% enthaltend 7 Gew.-%, bezogen auf den Festgehalt, Polyvinylalkohol mit einem Verseifungsgrad von 88 Mol% und einer Höpplerviskosität von 4 mPa.s.

Die Bestimmung der Höpplerviskositäten der Schutzkolloide bzw. der Polymerdispersion erfolgte jeweils gemäß DIN 53015 in 4 %-iger wässriger Lösung bei 20°C.

### Herstellung der redispergierbaren Pulver (DPP):

Zur Herstellung von in Wasser redispergierbaren Polymerpulvern (DPP) wurde die wässrige Ethylen-Vinylacetat-Polymerdispersion mit 7 Gew.-% Schutzkolloiden entsprechend den Angaben in der Tabelle als Trocknungshilfe eingesetzt, bezogen auf die polymeren Bestandteile der Dispersionspulver, und mittels einer Zweistoffdüse versprüht. Die Verdüsung wurde mit 4 bar Druckluft durchgeführt, die gebildeten Tropfen wurden mit auf 125°C erhitzter Luft im Gleichstrom getrocknet. Das trockene Polymerpulver wurde mit 3 Gew.-% handelsüblichem Antiblockmittel (Kaolin) versetzt.

### Herstellung von mineralischen Baustoffmassen:

Die Bestandteile der folgenden Rezeptur wurden bei Raumtemperatur gemischt und zementäre Dichtschlämme erhalten:

| | |
|---|---|
| Quarzsand | 665 Teile |
| Portlandzement | 50 Teile |
| Cellulose | 5 Teile |
| DPP | 280 Teile |
| Wasser | 400 Teile |

### Bestimmung der Verarbeitbarkeit (VA) der mineralischen Baustoffmassen:

Die Einschätzung der Verarbeitbarkeit erfolgt während des Anmischens der Trockenkomponenten mit Wasser. Die Verarbeitbarkeit der Dichtungsschlämme wurde wie folgt klassifiziert:
1 = sehr gute, geschmeidige Verarbeitbarkeit, keine Kellenklebrigkeit;
2 = etwas schwergängige Verarbeitbarkeit, geringe Kellenklebrigkeit;
3 = unzureichende Verarbeitbarkeit, zäh und klebrig.

### Beurteilung des Geruchs der mineralischen Baustoffmassen

Für die Beurteilung des Geruchs wurde der jeweilige Dichtungsschlamm 15 Minuten nach dem Anmachen mit Wasser durch Schnüffeln überprüft. Die Testpersonen bewerteten den Geruch mit Schulnoten von 1 bis 5, wobei 1 für sehr gut bzw. geruchsfrei und 5 für schlechten bzw. intensiven Geruch steht und die Noten eine kontinuierliche Skala darstellen.

**Tabelle:**

| Polymerpulver | SK | GeruchsNote | VA |
|---|---|---|---|
| DPP-1 | SK-1 | 2 | 2 |
| DPP-2 | SK-2 | 2 | 1 |
| DPP-3 | SK-3 | 3 | 1 |
| VDPP-1 | SK-4 | 4 | 1 |
| VDPP-2 | VBSK-5 | 1 | 3 |
| VDPP-3 | VBSK-6 | 5 | 1 |
| VDPP-7 | VBSK-7 | 3 | 3 |

## Patentansprüche

1. Verwendung von Polyvinylalkohol stabilisierten Polymerisaten in mineralischen Baustoffmassen, **dadurch gekennzeichnet, dass**
ein oder mehrere Polyvinylalkohole der Polyvinylalkohol stabilisierten Polymerisate ein oder mehrere tertiäre Amin-Gruppen oder ein oder mehrere quartäre Ammonium-Gruppen enthalten.

2. Verwendung von Polyvinylalkohol stabilisierten Polymerisaten nach Anspruch 1, **dadurch gekennzeichnet, dass** die Polyvinylalkohole, die ein oder mehrere tertiäre Amin-Gruppen oder ein oder mehrere quartäre Ammonium-Gruppen enthalten, erhältlich sind mittels Copolymerisation von einem oder mehreren ethylenisch ungesättigten Monomeren, die ein oder mehrere tertiäre Amin-Gruppen oder ein oder mehrere quartäre Ammonium-Gruppen enthalten, mit einem oder mehreren Vinylestern von unverzweigten oder verzweigten Carbonsäuren mit 1 bis 15 C-Atomen, und anschließender Verseifung der damit erhaltenen Vinylester-Copolymerisate.

3. Verwendung von Polyvinylalkohol stabilisierten Polymerisaten nach Anspruch 2, **dadurch gekennzeichnet, dass** die ethylenisch ungesättigten Monomere, die ein oder mehrere tertiäre Amin-Gruppen oder ein oder mehrere quartäre Ammonium-Gruppen enthalten, ausgewählt werden aus der Gruppe umfassend Allyl-Alkyl-Ammoniumhalogenide, (Meth)Acryloxy-Alkyl-Ammoniumhalogenide, (Meth)Acrylamido-Alkyl-Ammoniumhalogenide, Amino-Alkyl-(Meth)Acrylat und AminoAlkyl-(Meth)Acrylamid, wobei die Alkylreste 1 bis 20 C-Atome enthalten können, sowie Vinyl-Gruppen tragende, Stickstoffatom-haltige, gegebenenfalls substituierte Heteroaromaten.

4. Verwendung von Polyvinylalkohol stabilisierten Polymerisaten nach Anspruch 2 oder 3, **dadurch gekennzeichnet, dass** die ethylenisch ungesättigten Monomere, die ein oder mehrere tertiäre Amin-Gruppen oder ein oder mehrere quartäre Ammonium-Gruppen enthalten, ausgewählt werden aus der Gruppe umfassend 2-Dimethylaminoethylmethacrylat und 3-Dimethylaminopropylmethacrylamid, N-(1,1-Dimethyl-3-dimethylaminopropyl)acrylamid, N-(1,1-Dimethyl-3-dimethylaminobutyl)acrylamid, N-(1-Methyl-1,3-diphenyl-3-diethyl-aminopropyl)methacrylamid, 1-Vinylimidazol, 1-Vinyl-2-methylimidazol, 1-Vinyl-2-ethylimidazol, 1-Vinyl-2-phenylimidazol, 1-Vinyl-2,3-dimethylimidazol und 1-Vinyl-2,4,5-trimethylimidazol, Diallyldiethylammoniumchlorid, (3-Methacryloxy)propyltrimethylammoniumchlorid, (3-Methacryloxy)ethyltrimethylammoniumchlorid, (3-Methacrylamido)propyltrimethyl-ammoniumchlorid, Trimethyl-3-(1-acrylamido-1,1-dimethylpropyl)ammoniumchlorid, Trimethyl-3-(1-acrylamido-1,1-dimethylbutyl)ammoniumchlorid, Dimethylacrylamidopropyl-4-trimethylammoniumbutenyl-2-ammoniumchlorid, (2-Acrylamidomethoxy)ethyltrimethylammo-niumchlorid und Diallyldimethylammoniumchlorid.

5. Verwendung von Polyvinylalkohol stabilisierten Polymerisaten nach Anspruch 2 bis 4, **dadurch gekennzeichnet, dass** die Stickstoff funktionalisierten Polyvinylalkohole auf 0,1 bis 50 Mol% an Monomer-Einheiten basieren, die ein oder mehrere tertiäre Amin-Gruppen und/oder ein oder mehrere quartäre Ammonium-Gruppen enthalten, je bezogen auf die Gesamtzahl an Vinylalkohol-Einheiten und der Monomer-Einheiten, die ein oder mehrere tertiäre Amin-Gruppen und/oder ein oder mehrere quartäre Ammonium-Gruppen enthalten, sowie gegebenenfalls der Vinylacetat-Einheiten der Stickstoff funktionalisierten Polyvinylalkohole.

6. Verwendung von Polyvinylalkohol stabilisierten Polymerisaten nach Anspruch 1 bis 5, **dadurch gekennzeichnet, dass** die Polyvinylalkohole, die ein oder mehrere tertiäre Amin-Gruppen oder ein oder mehrere quartäre Ammonium-Gruppen enthalten, einen Hydrolysegrad von 0,2 bis 100 Mol-% haben.

7. Verwendung von Polyvinylalkohol stabilisierten Polymerisaten nach Anspruch 1 bis 6, **dadurch gekennzeichnet, dass** die Polymerisate, die mit Polyvinylalkohol stabilisiert sind, auf einem oder mehreren Monomeren basieren ausgewählt aus der Gruppe umfassend Vinylester von unverzweigten oder verzweigten Alkylcarbonsäuren mit 1 bis 15 C-Atomen, Methacrylsäureester oder Acrylsäureester von Alkoholen mit 1 bis 15 C-Atomen, Vinylaromaten, Olefine, Diene und Vinylhalogenide.

8. Verwendung von Polyvinylalkohol stabilisierten Polymerisaten nach Anspruch 1 bis 7, **dadurch gekennzeichnet, dass** die mineralischen Baustoffmassen 1 bis 50 Gew.-% mineralische Bindemittel, 0,5 bis 40 Gew.-% Polyvinylalkohol stabilisierte Polymerisate, die mit einem oder mehreren Polyvinylalkoholen enthaltend ein oder mehrere tertiäre Amin-Gruppen oder ein oder mehrere quartäre Ammonium-Gruppen stabilisiert sind, 45 bis 80 Gew.-% Füllstoffe und gegebenenfalls 0 bis 5 Gew.-% Additive enthalten, wobei sich die Angaben in Gew.-% auf das Trockengewicht der mineralischen Baustoffmassen beziehen und sich insgesamt auf 100 Gew.-% addieren.

9. Verwendung von Polyvinylalkohol stabilisierten Polymerisaten nach Anspruch 1 bis 6, **dadurch gekennzeichnet, dass** die mineralischen Baustoffmassen als Baukleber, Putze, Spachtelmassen, Verlaufsmassen, Dichtschlämmen, Fugenmörtel oder zur Betonmodifizierung verwendet werden.

## Claims

1. Use of polyvinyl alcohol-stabilized polymers in mineral building material compositions, **characterized in that**
one or more polyvinyl alcohols of the polyvinyl alcohol-stabilized polymers comprise one or more tertiary amine groups or one or more quaternary ammonium groups.

2. Use of polyvinyl alcohol-stabilized polymers according to Claim 1, **characterized in that** the polyvinyl alcohols which comprise one or more tertiary amine groups or one or more quaternary ammonium groups are obtainable by copolymerization of one or more ethylenically unsaturated monomers which comprise one or more tertiary amine groups or one or more quaternary ammonium groups with one or more vinyl esters of unbranched or branched carboxylic acids having 1 to 15 C atoms, and subsequent hydrolysis of the resulting vinyl ester copolymers.

3. Use of polyvinyl alcohol-stabilized polymers according to Claim 2, **characterized in that** the ethylenically unsaturated monomers which comprise one or more tertiary amine groups or one or more quaternary ammonium groups are selected from the group encompassing allylalkylammonium halides, (meth)acryloyloxyalkylammonium halides, (meth)acrylamidoalkylammonium halides, aminoalkyl (meth)acrylate and aminoalkyl(meth)acrylamide, in which the alkyl radicals may contain 1 to 20 C atoms, and also nitrogen atom-containing, optionally substituted heteroaromatics which carry vinyl groups.

4. Use of polyvinyl alcohol-stabilized polymers according to Claim 2 or 3, **characterized in that** the ethylenically unsaturated monomers which comprise one or more tertiary amine groups or one or more quaternary ammonium groups are selected from the group encompassing 2-dimethylaminoethyl methacrylate and 3-dimethylaminopropylmethacrylamide, N-(1,1-dimethyl-3-dimethylaminopropyl)acrylamide, N-(1,1-dimethyl-3-dimethylaminobutyl)acrylamide, N-(1-methyl-1,3-diphenyl-3-diethylaminopropyl)methacrylamide, 1-vinylimidazole, 1-vinyl-2-methylimidazole, 1-vinyl-2-ethylimidazole, 1-vinyl-2-phenylimidazole, 1-vinyl-2,3-dimethylimidazole, and 1-vinyl-2,4,5-trimethylimidazole, diallyldiethylammonium chloride, (3-methacryloyloxy)propyltrimethylammonium chloride, (3-methacryloyloxy)ethyltrimethylammonium chloride, (3-methacrylamido)propyltrimethylammonium chloride, trimethyl-3-(1-acrylamido-1,1-dimethylpropyl)ammonium chloride, trimethyl-3-(1-acrylamido-1,1-dimethylbutyl)ammonium chloride, dimethylacrylamidopropyl-4-trimethylammoniobuten-2-ylammonium chloride, (2-acrylamidomethoxy)ethyltrimethylammonium chloride, and diallyldimethylammonium chloride.

5. Use of polyvinyl alcohol-stabilized polymers according to Claim 2 to 4, **characterized in that** the nitrogen-functionalized polyvinyl alcohols are based on 0.1 to 50 mol% of monomer units which comprise one or more tertiary amine groups and/or one or more quaternary ammonium groups, each based on the total number of vinyl alcohol units and of the monomer units which comprise one or more tertiary amine groups and/or one or more quaternary ammonium groups, and also, optionally, on the vinyl acetate units of the nitrogen-functionalized polyvinyl alcohols.

6. Use of polyvinyl alcohol-stabilized polymers according to Claim 1 to 5, **characterized in that** the polyvinyl alcohols which comprise one or more tertiary amine groups or one or more quaternary ammonium groups have a degree of hydrolysis of 0.2 to 100 mol%.

7. Use of polyvinyl alcohol-stabilized polymers according to Claim 1 to 6, **characterized in that** the polymers stabilized with polyvinyl alcohol are based on one or more monomers selected from the group encompassing vinyl esters of unbranched or branched alkylcarboxylic acids having 1 to 15 C atoms, methacrylic esters or acrylic esters of alcohols having 1 to 15 C atoms, vinylaromatics, olefins, dienes, and vinyl halides.

8. Use of polyvinyl alcohol-stabilized polymers according to Claim 1 to 7, **characterized in that** the mineral building material compositions comprise 1 to 50 wt% of mineral binders, 0.5 to 40 wt% of polyvinyl alcohol-stabilized polymers stabilized with one or more polyvinyl alcohols comprising one or more tertiary amine groups or one or more quaternary ammonium groups, 45 to 80 wt% of fillers, and optionally 0 to 5 wt% of additives, the amounts in wt% being based on the dry weight of the mineral building material compositions and adding up in total to 100 wt%.

9. Use of polyvinyl alcohol-stabilized polymers according to Claim 1 to 6, **characterized in that** the mineral building material compositions are used as construction adhesives, renders, filling compounds, leveling compounds, grouts, jointing mortars, or for concrete modification.

## Revendications

1. Utilisation de polymères stabilisés par de l'alcool polyvinylique dans des matériaux de construction minéraux, **caractérisée en ce qu'**un ou plusieurs alcools polyvinyliques des polymères stabilisés par de l'alcool polyvinylique contiennent un ou plusieurs groupes amine tertiaires ou un ou plusieurs groupes ammonium quaternaires.

2. Utilisation de polymères stabilisés par de l'alcool polyvinylique selon la revendication 1, **caractérisée en ce que** les alcools polyvinyliques qui contiennent un ou plusieurs groupes amine tertiaires ou un ou plusieurs groupes ammonium quaternaires peuvent être obtenus par copolymérisation d'un ou de plusieurs monomères éthyléniquement insaturés qui contiennent un ou plusieurs groupes amine tertiaires ou un ou plusieurs groupes ammonium quaternaires avec un ou plusieurs esters de vinyle d'acides carboxyliques non ramifiés ou ramifiés contenant 1 à 15 atomes C, puis saponification des copolymères d'ester de vinyle ainsi obtenus.

3. Utilisation de polymères stabilisés par de l'alcool polyvinylique selon la revendication 2, **caractérisée en ce que** les monomères éthyléniquement insaturés qui contiennent un ou plusieurs groupes amine tertiaires ou un ou plusieurs groupes ammonium quaternaires sont choisis dans le groupe comprenant les halogénures d'allyl-alkyl-ammonium, les halogénures de (méth)acryloxy-alkyl-ammonium, les halogénures de (méth)acrylamido-alkyl-ammonium, le (méth)acrylate d'amino-alkyle et l'amino-alkyl-(méth)acrylamide, les radicaux alkyle pouvant contenir 1 à 20 atomes C, ainsi que les composés hétéroaromatiques portant des groupes vinyle, contenant un atome d'azote, éventuellement substitués.

4. Utilisation de polymères stabilisés par de l'alcool polyvinylique selon la revendication 2 ou 3, **caractérisée en ce que** les monomères éthyléniquement insaturés qui contiennent un ou plusieurs groupes amine tertiaires ou un ou plusieurs groupes ammonium quaternaires sont choisis dans le groupe comprenant le méthacrylate de 2-diméthylaminoéthyle et le 3-diméthylaminopropylméthacrylamide, le N-(1,1-diméthyl-3-diméthylaminopropyl)acrylamide, le N-(1,1-diméthyl-3-diméthylaminobutyl)acrylamide, le N-(1-méthyl-1,3-diphényl-3-diéthyl-aminopropyl)méthacrylamide, le 1-vinylimidazole, le 1-vinyl-2-méthylimidazole, le 1-vinyl-2-éthylimidazole, le 1-vinyl-2-phénylimidazole, le 1-vinyl-2,3-diméthylimidazole et le 1-vinyl-2,4,5-triméthylimidazole, le chlorure de diallyldiéthylammonium, le chlorure de (3-méthacryloxy)propyltriméthylammonium, le chlorure de (3-méthacryloxy)éthyltriméthylammonium, le chlorure de (3-méthacrylamido)propyltriméthyl-ammonium, le chlorure de triméthyl-3-(1-acrylamido-1,1-diméthylpropyl)ammonium, le chlorure de triméthyl-3-(1-acrylamido-1,1-diméthylbutyl)ammonium, le chlorure de diméthylacryl-amidopropyl-4-triméthylammoniumbutényl-2-ammonium, le chlorure de (2-acrylamidométhoxy)éthyltriméthylammonium et le chlorure de diallyldiméthylammonium.

5. Utilisation de polymères stabilisés par de l'alcool polyvinylique selon les revendications 2 à 4, **caractérisée en ce que** les alcools polyvinyliques fonctionnalisés par de l'azote sont à base de 0,1 à 50 % en moles d'unités monomères qui contiennent un ou plusieurs groupes amine tertiaires et/ou un ou plusieurs groupes ammonium quaternaires, à chaque fois par rapport au nombre total d'unités alcool vinylique et des unités monomères qui contiennent un ou plusieurs groupes amine tertiaires et/ou un ou plusieurs groupes ammonium quaternaires, ainsi qu'éventuellement des unités acétate de vinyle des alcools polyvinyliques fonctionnalisés par de l'azote.

6. Utilisation de polymères stabilisés par de l'alcool polyvinylique selon les revendications 1 à 5, **caractérisée en ce que** les alcools polyvinyliques qui contiennent un ou plusieurs groupes amine tertiaires ou un ou plusieurs groupes ammonium quaternaires ont un degré d'hydrolyse de 0,2 à 100 % en moles.

7. Utilisation de polymères stabilisés par de l'alcool polyvinylique selon les revendications 1 à 6, **caractérisée en ce que** les polymères qui sont stabilisés avec de l'alcool polyvinylique sont à base d'un ou de plusieurs monomères choisis dans le groupe comprenant les esters de vinyle d'acides alkylcarboxyliques non ramifiés ou ramifiés contenant 1 à 15 atomes C, les esters de l'acide méthacrylique ou les esters de l'acide acrylique d'alcools contenant 1 à 15 atomes C, les composés aromatiques de vinyle, les oléfines, les diènes et les halogénures de vinyle.

8. Utilisation de polymères stabilisés par de l'alcool polyvinylique selon les revendications 1 à 7, **caractérisée en ce que** les matériaux de construction minéraux contiennent 1 à 50 % en poids de liants minéraux, 0,5 à 40 % en poids de polymères stabilisés par de l'alcool polyvinylique, qui sont stabilisés avec un ou plusieurs alcools polyvinyliques contenant un ou plusieurs groupes amine tertiaires ou un ou plusieurs groupes ammonium quaternaires, 45 à 80 % en poids de charges et éventuellement 0 à 5 % en poids d'additifs, les données en % en poids se rapportant au poids sec des matériaux de construction minéraux et leur somme totale étant de 100 % en poids.

9. Utilisation de polymères stabilisés par de l'alcool polyvinylique selon les revendications 1 à 6, **caractérisée en ce que** les matériaux de construction minéraux sont utilisés en tant qu'adhésifs de construction, enduits, mastics, agents d'étalement, boues d'étanchéité, mortiers de jointoiement ou pour la modification de béton.
